# FASCICULE DE BREVET EUROPEEN

(11) **EP 0 838 415 B1**
(45) Date de publication et mention de la délivrance du brevet: **04.07.2001**
(21) Numéro de dépôt: 96402246.1
(22) Date de dépôt: 22.10.1996
(51) Int. Cl.: B65G 15/62

(54) **Dispositif amortisseur de chocs pour point d'alimentation de convoyeur à courroie**
Stossdämpfungseinrichtung für die Beladestelle eines Bandförderers
Shock absorbing device for the loading point of a belt conveyor

(43) Date de publication de la demande: 29.04.1998
(73) Titulaire: IATROPOULOS, Alexandre, F-77810 Thomery (FR)
(72) Inventeur: IATROPOULOS, Alexandre, F-77810 Thomery (FR)

(56) Documents cités:
- AU-B- 538 180
- AU-B- 583 190
- DE-U- 7 404 730
- FR-A- 2 009 151
- US-A- 3 443 678

## Description

### Etat actuel de la technique -

L'invention est relative à un dispositif amortisseur de chocs pour courroie de convoyeur.

Les produits en vrac transportés à l'aide de convoyeur à courroie sont déposés sur celle-ci, formée en auge en un point qui peut être fixe ou mobile nommé "point de chargement".

La chute des produits en ce point engendre parfois des chocs qui provoquent des détériorations de la courroie soutenue par les dispositifs traditionnels qui peuvent être de différente nature.
Rouleaux en acier
Rouleaux amortisseurs (rouleaux acier garnis de caoutchouc).
Barres d'impact (barres en élastomère revêtues d'un matériau glissant) disposées longitudinalement par rapport à la courroie.
Plateau de réception en matière plastique glissante supporté par des amortisseurs en caoutchouc.

### Exposé de l'(invention -

L'invention réside dans l'emploi d'un groupe de sangles élastiques équipées d'inserts de glissement pour soutenir la courroie transversalement au droit des chocs provoqués par les produits déversés au "point d'alimentation".

Le dispositif amortisseur comporte plusieurs sangles plus ou moins écartées les unes des autres pouvant éventuellement former un tapis continu support de courroie.

La souplesse des sangles permet de les former en auge suivant les profils variables adaptés aux différents convoyeurs.

Largueur, épaisseur et dureté sont déterminées pour obtenir une sangle telle que les efforts d'impact des produits transportés se traduisent par un allongement de l'élastomère.

Le glissement de la courroie est assuré par des inserts en matériau glissant dont le nombre, la surface et l'implantation peuvent varier en fonction du problème à traiter.

Les inserts de glissement sont intégrés à la sangle par tout moyen permettant à l'élastomère de s'allonger pour jouer son rôle amortisseur.

Des perforations réalisées dans les inserts peuvent permettre de les sceller à la sangle lors de sa réalisation par coulage.

La sangle est supportée par des supports réalisés pour se substituer aux supports de rouleaux classiques.

Un berceau supportant plusieurs sangles peut réaliser un ensemble d'alimentation dont l'angle d'auge peut être fixe ou variable par réglage de l'écartement, de la hauteur et de l'orientation.

Ce type de berceau permet de former les sangles à des angles d'auge profonde inusité dans les convoyeurs classiques.
La fixation des sangles au support ou berceau peut être obtenue :
- par serrage par vis entre 2 plans
- par serrage et appui d'un talon intégré à la sangle
- par pattes ou crochets métalliques noyés partiellement dans l'élastomère.
ou tout autre système capable d'accepter les efforts engendrés par le poids de la courroie et des produits ainsi que l'allongement du à l'absorbtion des impacts.

### Présentation des figures -

- Figure 1 et 2 -: illustrant la composition de la sangle **1** comportant les talons **2,** les trous de fixation **3,** les inserts de glissement **4** de forme circulaire ou **5** en forme de plaquette.
- Figure 3 -: illustre un mode de fixation par Talon **2** en butée sur une bride 6 maintenue par les vis **7** sur le support **17** illustre également le scellement **8** de la plaquette **5** SUR LA SANGLE **1.**
- Figure 4 -: illustre un mode de fixation par bride **9** et vis **10** et la fixation d'un insert **4** par perforation de la sangle **1**
- Figure 5 -: illustre la possibilité de surmouler un crochet ou une patte métallique dans la sangle **1**
illustre à nouveau la fixation des inserts 5 par scellement **8** coulé avec la sangle.

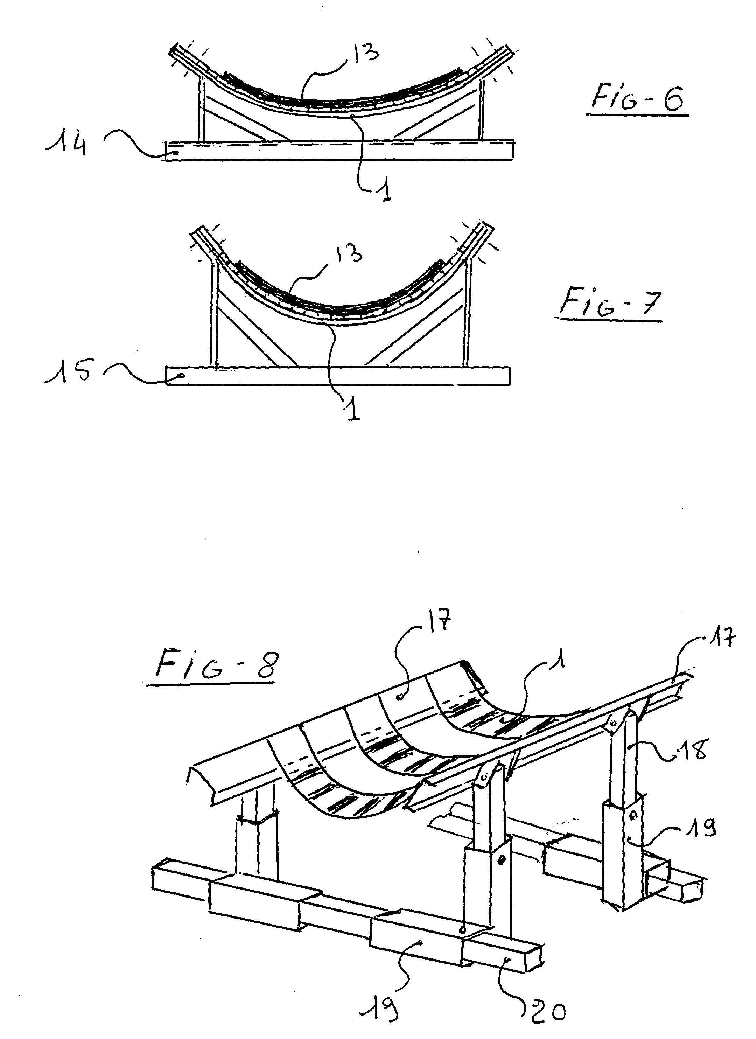

- Figure 6 -: illustre la forme d'auge "plate" de la courroie **13** soutenue par une sangle dans un support fixe **14**
- Figure 7 -: illustre la variation de profondeur de l'auge avec une même courroie (que figure 6) soutenue dans un support fixe **15** plus étroit et plus haut.
- Figure 8 -: illustre la possibilité de réaliser un berceau support de plusieurs sangles **1** fixées à 2 longerons **17** articulés sur les chandelles **18** qui permettent de régler la hauteur.

Les supports **19** en se déplaçant sur les barres **20** permettent de régler la largeur.

L'ensemble de ces réglages permettent de former les sangles pour les adapter à toutes les formes d'auge y compris pour des profondeurs inusitées.

### Exposé détaillé -

La courroie **13** étant en mouvement glisse sur les inserts **4** ou **5** solidaires des sangles **1**

Le mode de fixation des inserts **4** ou **5** permet aux sangles **1** de se déformer par allongement sous l'effet des chocs engendrés par la chute des produits sur la courroie **13**.

Cet allongement proportionnel à la puissance des chocs reçus correspond à l'effet d'amortissement recherché au bénéfice de la courroie **13.**

Les sangles **1** sont fixées au support réglable **17** ou fixes **14** et **15** par plusieurs types de fixation.

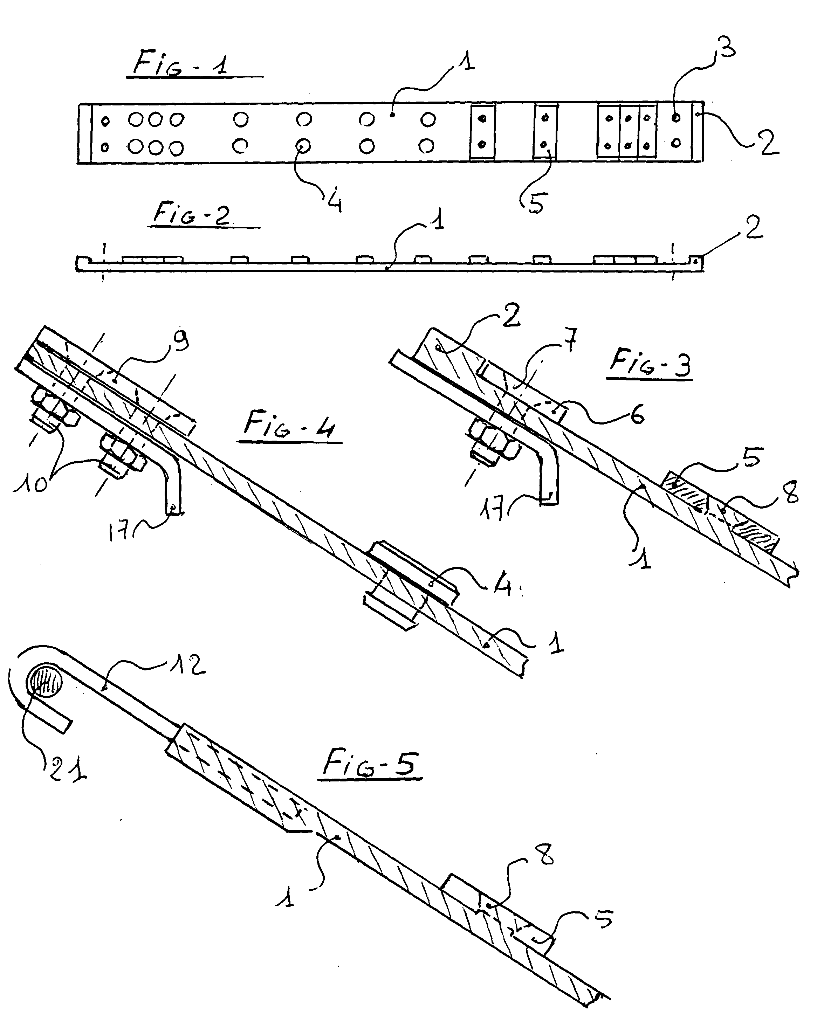

- Figure 3 -: La sangle est munie de 2 talons **2** qui viennent en appui sur les brides **6** destinées à serrer la sangle **1** sur le support **17** par l'intermédiaire des vis **7**
- Figure 4 -: La sangle **1** est serrée entre le support **17** et les brides **9** par des vis **10**
- Figure 5 -: Des pattes ou crochets métalliques **12** sont intégrés au moulage dans la sangle **1** pour venir se placer sur le haut d'un support **21**.

Les supports **14** ou **15** correspondent à des angles d'auge de la courroie **13** de différentes profondeurs.

Le berceau représenté figure 8 est réglable par glissement des éléments **19** sur les barres **20** (réglage en largeur) ainsi que par le glissement des chandelles **18** dans les éléments **19** (réglage en hauteur.

Ces 2 réglages associés à l'orientation des longerons **17** sur les chandelles **18** permettent de réaliser tous les profils d'auge classiques et des augess plus profondes pour certaines applications.

### Application industrielle -

Adapté à l'amortissement des chocs engendrés par le chargement de tout type de produit sur une courroie de convoyeur, l'invention peut contribuer à augmenter la longévité des courroies en évitant les détériorations par poinçonnage.

Les domaines d'application possible sont : les Mines, les Carrières, la Sidérurgie, les Travaux publics, l'agroalimentaire et toute industrie utilisant des convoyeurs dont la courroie est maltraitée au chargement des produits à transporter.

## Revendications

1. Dispositif amortisseur de chocs pour courroie de convoyeur, caractérisé par l'utilisation d'un groupe de sangles en élastomère (**1**) garnies d'inserts de glissement à faible coefficient de frottement (**4**) ou (**5**) pour soutenir la courroie (**13**) transversalement au point d'alimentation où elle est soumise à des chocs violents provoqués par les produits à transporter.

2. Sangle d'amortissement selon la revendication 1 caractérisée en ce que le mode de fixation des inserts de glissement (**4**) ou (**5**) laisse toute liberté d'allongement à l'élastomère (**1**).

3. Sangle d'amortissement selon la revendication 2 caractérisée en ce que des talons (**12**) réalisés par moulage aux extrémités de la sangle participent à la fixation par appui sur les brides (**6**).

4. Sangle d'amortissement selon la revendication 2 caractérisée en ce que les inserts (**5**) peuvent être scellés au coulage de la sangle (**1**) par introduction d'élastomère dans les perforations (**8**) prévues à cet effet.

5. Dispositif amortisseur selon la revendication 1 caractérisée en ce que la souplesse des sangles (**1**) permet de faire varier le profil de l'auge à volonté pour atteindre des profondeurs inusitées avec les supports à rouleaux classiques.

6. Dispositif amortisseur selon revendication 5 caractérisée en ce que un berceau réglable en hauteur, largeur et orientation peut soutenir plusieurs sangles (**1**) pour traiter l'ensemble d'un point d'alimentation.

7. Dispositif amortisseur selon revendication 6 caractérisé en ce que la juxtaposition des sangles (**1**) peut constituer un tapis amortisseur.

## Patentansprüche

1. Stossdämpfungseinrichtung für einen Bandförderer, gekennzeichnet durch die Verwendung einer Gruppe von Gurten aus Elastomer (1), welche mit Gleiteinsätzen niedrigen Reibungskoeffizienten (4) und/oder (5) versehen sind, um das Band (13) quer zum Beladungspunkt zu stützen, wo das Band heftigen Stössen ausgesetzt ist, welche durch die zur transportierenden Produkte hervorgerufen werden.

2. Dämpfungsgurt nach Anspruch 1, dadurch gekennzeichnet, dass der Befestigungsmodus der Gleiteinsätze (4) oder (5) das Elastomer (1) sich ganz frei ausdehnen lässt.

3. Dämpfungsgurt nach Anspruch 2, dadurch gekennzeichnet, dass Absätze (2), welche durch Formung an den Enden des Gurtes hergestellt sind, beim Festmachen durch Abstützung an Klemmen (6) mitwirken.

4. Dämpfungsgurt nach Anspruch 2, dadurch gekennzeichnet, dass die Einsätze (5) beim Giessen des Gurtes (1) durch Einbringen von Elastomer in die zu diesem Zwecke vorgesehenen Löcher (8) gegossen wird.

5. Dämpfungseinrichtung nach Anspruch 1, dadurch gekennzeichnet, dass die Geschmeidigkeit der Gurte (1) es erlaubt das Trogprofil beliebig zu ändern, um Tiefen zu erreichen, welche bei den klassischen Trägern mit Rollen ungewöhnlich sind.

6. Dämpfungseinrichtung nach Anspruch 5, dadurch gekennzeichnet, dass ein in Höhe, Breite und Orientierung einstellbarer Tragkorb mehrere Gurte (1) stützen kann, um die Ganzheit eines Beladungspunktes zu behandeln.

7. Dämpfungseinrichtung nach Anspruch 6, dadurch gekennzeichnet, dass das nebeneinander Anordnen von Gurten (1) einen Dämpfungsteppich bilden kann.

## Claims

1. Shock absorbing device for a belt conveyor, characterized by the use of a group of straps (1) consisting of elastomer and coated with slide inserts having a low friction coefficient (4) or (5) for supporting the belt (13) transversely to the loading point where the belt is subject to a violent impact caused by the goods to be conveyed.

2. Shock absorbing strap according to claim 1, characterized in that the fixation mode of the slide inserts (4) or (5) leaves the elastomer (1) completely free to extend.

3. Shock absorbing strap according to claim 2, characterized in that the shoulders (2) realized by forming at the ends of the strap support fixation by resting on collars (6).

4. Shock absorbing strap according to claim 2, characterized in that the inserts (5) may be sealed when casting the strap (1) by introducing elastomer into the holes (8) provided to this effect.

5. Shock absorbing device according to claim 1, characterized in that the flexibility of the straps allows to vary trough profile at will to realize depths unusual with standard roller supports.

6. Shock absorbing device according to claim 5, characterized in that a cradle adjustable in height, width and orientation which may support several straps (1) to treat the whole of a loading point.

7. Shock absorbing device according to claim 6, characterized in that juxtaposition of several straps may form a shock absorbing carpet.
